# EUROPEAN PATENT APPLICATION

(11) **EP 3 073 393 A1**
(43) Date of publication of application: **28.09.2016**
(21) Application number: 14874156.4
(22) Date of filing: 08.12.2014
(51) Int. Cl.: G06F 17/30

(54) **DATA PROCESSING METHOD AND DEVICE**

(30) Priority: 24.12.2013 CN 201310724706
(71) Applicant: ZTE Corporation, Shenzhen, Guangdong 518057 (CN)
(72) Inventor: SHANG, Ergang, Shenzhen Guangdong 518057 (CN); SHEN, Shanhong, Shenzhen Guangdong 518057 (CN); WANG, Mei, Shenzhen Guangdong 518057 (CN)
(74) Representative: Willquist, Sofia Ellinor
(86) International application number: PCT/CN2014/093219
(87) International publication number: WO 2015/096610

(57) **Abstract**

A method and device for data processing are disclosed, the method includes: collecting related data of all mobile terminal users having activities in a specified region within a specified time period based on an operator network; mining and analyzing a characteristic attribute(s) of each mobile terminal user according to the related data of the mobile terminal users; reflecting running tracks and user distribution densities of the mobile terminal users having specified characteristic attributes on a map in a visualization manner. With the method and device of the embodiments of the present invention, the activity regional information of a target user group can be defined.

## Description

### Technical Field

The present invention relates to the communication field, and specifically, to a method and device for data processing.

### Background of the Related Art

Outdoor advertising is to follow the pace of the municipal construction, and is independent of the advertising form of the whole time, high frequency, cost per thousand relatively lower formed by the conventional media, it has an extremely strong commercial value and social value for beautifying the city. One piece of outdoor advertising which has unique form, innovative idea, effective operation increasingly becomes one of the main forms of advertising. Effective site selection and exactly putting is the key to determine the success of the piece of outdoor advertising. Traditional way of site selection basically is to choose the crowded areas according to the experiences, but the characteristics of the crowd in this area may not be known, and the matching degree between the characteristics of the crowd and the contents of advertisements may not be known, so the advertising effectiveness is not good in most cases.

### Summary of the Invention

The embodiments of the present invention provide a method and device for data processing, to define the activity regional information of a target user group.

In order to solve the above technical problem, the embodiments of the present invention provide a method for data processing, comprising:
collecting related data of all mobile terminal users having activities in a specified region within a specified time period based on an operator network;
analyzing a characteristic attribute(s) of each mobile terminal user according to the related data of the mobile terminal users;
displaying running tracks and distribution densities of mobile terminal users having specified characteristic attributes on a map.

Alternatively, the above method further has the following feature: the related data of the mobile terminal users comprise one or more of the following:
basic information data, signaling data, internet-surfing data, call record data of the mobile terminal users.

Alternatively, the above method further has the following feature: said displaying running tracks and distribution densities of mobile terminal users having specified characteristic attributes on a map comprises:
analyzing the distribution densities of the mobile terminal users having specified characteristic attributes, dividing the distribution densities into a plurality of density intervals, displaying the running tracks of the mobile terminal users having specified characteristic attributes on the map with a plurality of colors respectively corresponding to the plurality of density intervals.

Alternatively, the above method further has the following feature: the characteristic attributes of the mobile terminal users comprise one or more of the following:
age, sex, cultural level, hobby, profession, income, consumption level, family status, health status, place of residence or permanent location.

In order to solve the above technical problem, the embodiments of the present invention further provide a device for data processing, wherein, comprising:
a collecting module, configured to: collect related data of all mobile terminal users having activities in a specified region within a specified time period based on an operator network;
an analyzing module, configured to: analyze a characteristic attribute(s) of each mobile terminal user according to the related data of all the mobile terminal users collected by the collecting module;
a displaying module, configured to: display running tracks and distribution densities of mobile terminal users having specified characteristic attributes on a map.

Alternatively, the above device further has the following feature:
the related data of the mobile terminal users collected by the collecting module comprise one or more of the following:
basic information data, signaling data, internet-surfing data, call record data of the mobile terminal users.

Alternatively, the above device further has the following feature:
the displaying module being configured to display running tracks and distribution densities of mobile terminal users having specified characteristic attributes on a map, comprises: analyzing the distribution densities of the mobile terminal users having specified characteristic attributes, dividing the distribution densities into a plurality of density intervals, displaying the running tracks of the mobile terminal users having specified characteristic attributes on the map with a plurality of colors respectively corresponding to the plurality of density intervals.

Alternatively, the above device further has the following feature:
the characteristic attributes of the mobile terminal users analyzed by the analyzing module comprises one or more of the following: age, sex, cultural level, hobby, profession, income, consumption level, family status, health status, place of residence or permanent location.

The embodiment of the present invention further provides a computer program and a carrier thereof, the computer program comprises program instructions, when the program instructions are executed by a device for data processing, the device is enabled to implement the above method for data processing.

In conclusion, the embodiment of the present invention provides a method and device for data processing, which can define the activity regional information of a target user group, and has great significance for the site selection of outdoor advertising. The method and device can make the advertising publishers put the advertisements with a purpose in the case of understanding the characteristics of the advertising audiences, according to the characteristics of the product itself, aim at the consumers in accordance with the types of the activities of the people, which makes the customers shopping on the way, business people on the way to work or travelers be influenced before they make a purchase decision.

### Brief Description of Drawings

FIG. 1 is a flow chart of a method for data processing of the embodiment of the present invention.
FIG. 2 is a schematic chart of a device for data processing of the embodiment of the present invention.

### Preferred Embodiments of the Invention

The embodiments of the present invention will be described in detail in combination with the accompanying drawings below. It should be noted that the embodiments and the characteristics in the embodiments in the present application can be arbitrarily combined with each other in the case of no conflict. In addition, although the logical order is shown in the flow chart, but in some cases, the steps that are shown or described can be executed by the orders different from here.

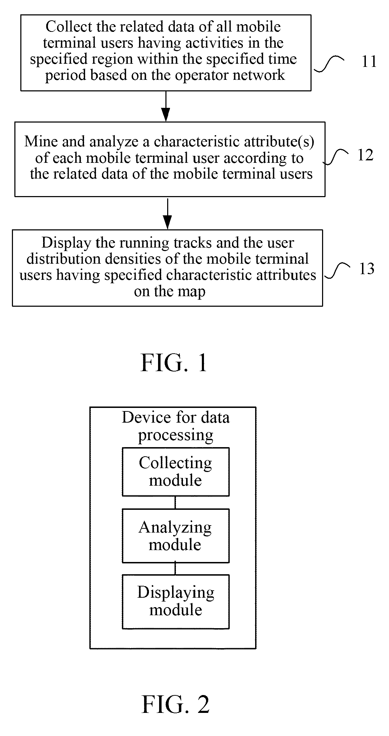

FIG. 1 is a flow chart of a method for data processing of the embodiment of the present invention, as shown in Fig.1, the method of the present embodiment comprises:
In step 11, it is to collect related data of all mobile terminal users having activities in a specified region within a specified time period based on an operator network;
In step 12, it is to mine and analyze a characteristic attribute(s) of each mobile terminal user according to the related data of the mobile terminal users;
In step 13, it is to displaying running tracks and distribution densities of the mobile terminal users having specified characteristic attributes on a map.

By this way, according to the method of the present embodiment, it can define the activity regional information of a target user group, and has great significance for the site selection of outdoor advertising. The method can make the advertising publishers put the advertisements with a purpose in the case of understanding the characteristics of the advertising audiences, according to the characteristics of the product itself, aim at the consumers in accordance with the types of the activities of the people, make the customers shopping on the way, business people on the way to work or travelers be influenced before they make a purchase decision.

FIG. 2 is a schematic chart of a device for data processing of the embodiment of the present invention, as shown in Fig. 2, it is the device of the present embodiment, the device comprises a processor, a program storage and a data storage, the program storage stores computer program instructions, the computer program instruction comprises:
a collecting module, applied to: collect related data of all mobile terminal users having activities in a specified region within a specified time period based on an operator network;
an analyzing module, applied to: analyze a characteristic attribute(s) of each mobile terminal user according to the related data of all the mobile terminal users collected by the collecting module;
a displaying module, applied to: display running tracks and distribution densities of the mobile terminal users having specified characteristic attributes on a map.

Wherein, the related data of the mobile terminal users collected by the collecting module comprise the following one or more: basic information data, signaling data, internet-surfing data, call record data of the mobile terminal users.

Wherein, the process of the displaying module displaying the running tracks and the distribution densities of the mobile terminal users having specified characteristic attributes on the map comprises: detecting the distribution densities of the mobile terminal users having specified characteristic attributes, displaying the running tracks of the mobile terminal users having specified characteristic attributes on the map with the colors corresponding to the relevant density intervals.

Wherein, the characteristic attributes of the mobile terminal users mined and analyzed by the analyzing module comprise the following one or more: age, sex, cultural level, hobby, profession, income, consumption level, family status, health status, place of residence or permanent location.

In the following, the method of the present invention will be described in detail by the example of the site selection of the outdoor advertising.

At first, it is to define the region to put the advertisement (such as, Shanghai), analyze the market positioning of the advertising products, estimate the characteristics of the consumer groups of the products;

Secondly, it is to collect the related data of all mobile users of cell-phones in the region in which the outdoor advertising is put within a period time based on the operator network;

For example, in the range of the region, it is to capture all mobile phone users having activities in the region within a period of time (3 months or half year) according to the operator network, according to basic attribute data, signaling data, internet-surfing data, call record data of the mobile phone users and a large amounts of data, mine and analyze the technology through the big data, learn the characteristics of the user group in the region (age structure, sex structure, cultural level, consumption level, preferences, etc).

Finally, it is to display the information of the running tracks, the activity routines and the distribution densities of the filtered audiences on a map of GIS (Geographic Information System), according to the color depth and the trajectory of GIS map region, choose the appropriate location to put the outdoor advertising.

For example, it is to screen out the effective audiences and potential audiences of the advertising products, rate in accordance with the degree of the filtered users in conformity with the market positioning of the advertising products, analyze the information of the running tracks, the activity routines and the distribution densities in the region of the filtered audiences by using big data analysis technology, the information is all displayed in the GIS (Geographic Information System) map, representing the density of target customers based on the color depth of the region on the GIS map; finally, it is to confirm the final location of site selection based on the color depth of the grids on the GIS map.

After selecting the site with the method of the present embodiment, advertisers not only can grasp the change of the stream of people in the region in real-time, but also can learn the characteristics of the crowed in the region. The advertisers can make the appropriate adjustments for the contents to be put according to the change of the stream of people and characteristics of the crowed, catch the audiences' eye in real-time, and maximize the investment returns.

In the following, the embodiment of the present invention will be described in detail by the example of putting the outdoor advertising in Shanghai.

### Embodiment 1

In Step 101, it is to defining the advertiser plans to put the advertisement in Shanghai,
In Step 102, it is to analyze the market positioning of the advertising products, analyze the characteristics of the consumer groups of the products (age structure, sex structure, cultural level, consumption level, preferences, profession, income, consumption level, family status, health status, place of residence or permanent location, etc.)
In Step 103, according to the region specified by the advertisers, Shanghai, it is to extract all the mobile phone users having activities records in Shanghai within latest 3-6 months in the operator network, and collect the basic attribute data, the signaling data, the internet-surfing data, the call record data of the users, including the data such as the short massages.

In Step 104, it is to mine and analyze the basic information data, the signaling data, the internet-surfing data, the call record data of the users of Shanghai in the region, give the user a label, depict a detailed three-dimensional user portrait. By analyzing the user preferences through internet-surfing data, it needs to build a semantic model, this model includes the user content preference label and the eigenvector corresponding to each type of label, and then it is to judge which model is close to the corresponding contents of URL (Uniform Resource Locator) and make a concrete content label. When setting up a semantic model, first it needs to define the type of the label and the corresponding corpus, the corpus can capture through the web spiders, then it is to establish a semantic model through the TF-IDF (Term Frequency-Inverse Document Frequency) algorithm.

In Step 105, according to the result of step 104, it is to obtain the characteristics of the user groups of Shanghai in the region (age structure, sex structure, cultural level, consumption level, preferences, profession, income, consumption level, family status, health status, place of residence or permanent location, etc.), and, by using the similarity between the characteristics of the user groups of Shanghai in the region obtained in step 104 and the characteristics of the target users obtained according to the result of step 102, it is to screen out the target customer groups, according to user's portrait, screen out all the users having the above characteristic attributes, and then judge the region and frequency of the user activities according to trajectory analysis of the users.

In Step 106, it is to analyze the information of the running tracks, the activity routines and the distribution densities in the region of the filtered audiences by using big data analysis technology, display all the information in the GIS map of Shanghai to represent the density of target customers based on the color depth of the region on the GIS map of Shanghai.

In Step 107, it is to choose the appropriate location to put the outdoor advertising based on the color depth of the region and the trajectory on the GIS map of Shanghai in step 106.

In Step 108, it is to implement effective monitoring, take online questionnaire survey, customer feedback and other ways to implement effective monitoring for the outdoor advertising, and enrich the analysis knowledge base.

### Embodiment 2:

In Step 201, it is to define the advertiser plans to put the advertisement in Shanghai,
In Step 202, according to the region specified by the advertisers, Shanghai, it is to extract all the mobile phone users having activities records in Shanghai within latest 3-6 months in the operator network, and collect the basic attribute data, the signaling data, the internet-surfing data, the call record data of the users, including the data such as the short massage.

In Step 203, it is to mine and analyze the basic information data, the signaling data, the internet-surfing data, the call record data of the users of Shanghai in the region, give the user a label, depict a detailed three-dimensional user portrait. By analyzing the user preferences through internet-surfing data, it needs to build a semantic model, this model includes the user content preference label and the eigenvector corresponding to each type of label, and then it is to judge which model is close to the corresponding contents of URL and make a concrete content label. When setting up a semantic model, first it needs to define the type of the labels and the corresponding corpus, the corpus can capture through the web spiders, then it is to establish a semantic model through the TF-IDF algorithm.

In Step 204, according to the result of step 203, it is to obtain the characteristics of the user groups attribute of Shanghai in the region (age structure, sex structure, cultural level, consumption level, preferences, etc.), screen out all the target customer groups which comply with the market positioning of the advertising products in Shanghai, and then judge the region and frequency of the user activities according to trajectory analysis of the filtered target customer groups.

In Step 205, it is to analyze the information of the running tracks, the activity routines and the distribution densities in the region of the filtered target customer groups by using big data analysis technology, display all the information in the GIS map of Shanghai to represent the density and activity frequency of target customers based on the color depth of the region on the GIS map of Shanghai.

In Step 206, it is to choose the appropriate location to put the outdoor advertising based on the color depth of the region and the trajectory on the GIS map of Shanghai in step 205.

In Step 207, it is to implement effective monitoring, take online questionnaire survey, customer feedback and other ways to implement effective monitoring for the outdoor advertising, and enrich the analysis knowledge base.

From the above embodiments, the technical scheme provided in the present embodiment can satisfy the requirement that the advertising publishers put the outdoor advertisements accurately in the case of understanding the characteristics of the advertising audiences and maximize the investment returns.

The ordinary person skilled in the art can understand that all or part of the steps in the above method can be completed by a program instructing related hardware, and the program can be stored in a computer readable memory medium, such as a read-only memory, magnetic disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present invention is not limited to any combination of hardware and software in a specific form.

The above is only the preferred embodiments of the present invention, of course, the present invention can still have other various embodiments, the skilled people familiar to the art can make various corresponding changes and transformations according to the present invention without departing from the rule and essence of the present invention, however, these corresponding changes and transformations shall all belong to the protection scope of the appended claims of the present invention.

### Industrial Applicability

The embodiment of the present invention provides a method and device for data processing, which can define the activity regional information of a target user group, and has great significance for the site selection of outdoor advertising. The method and device can make the advertising publishers put the advertisements with a purpose in the case of understanding the characteristics of the advertising audiences, according to the characteristics of the product itself, aim at the consumers in accordance with the types of the activities of the people, which makes the customers shopping on the way, business people on the way to work or travelers be influenced before they make a purchase decision.

## Claims

1. A method for data processing, comprising:
collecting related data of all mobile terminal users having activities in a specified region within a specified time period based on an operator network;
analyzing a characteristic attribute(s) of each mobile terminal user according to the related data of the mobile terminal users;
displaying running tracks and distribution densities of mobile terminal users having specified characteristic attributes on a map.

2. The method according to claim 1, wherein, the related data of the mobile terminal users comprise one or more of the following:
basic information data, signaling data, internet-surfing data, call record data of the mobile terminal users.

3. The method according to claim 1, wherein, said displaying running tracks and distribution densities of mobile terminal users having specified characteristic attributes on a map comprises:
analyzing the distribution densities of the mobile terminal users having specified characteristic attributes, dividing the distribution densities into a plurality of density intervals, displaying the running tracks of the mobile terminal users having specified characteristic attributes on the map with a plurality of colors respectively corresponding to the plurality of density intervals.

4. The method according to any one of claims 1-3, wherein, the characteristic attributes of the mobile terminal users comprise one or more of the following:
age, sex, cultural level, hobby, profession, income, consumption level, family status, health status, place of residence or permanent location.

5. A device for data processing, comprising:
a collecting module, configured to: collect related data of all mobile terminal users having activities in a specified region within a specified time period based on an operator network;
an analyzing module, configured to: analyze a characteristic attribute(s) of each mobile terminal user according to the related data of all the mobile terminal users collected by the collecting module;
a displaying module, configured to: display running tracks and distribution densities of mobile terminal users having specified characteristic attributes on a map.

6. The device according to claim 5, wherein:
the related data of the mobile terminal users collected by the collecting module comprise one or more of the following:
basic information data, signaling data, internet-surfing data, call record data of the mobile terminal users.

7. The device according to claim 5, wherein:
the displaying module being configured to display running tracks and distribution densities of mobile terminal users having specified characteristic attributes on a map, comprises:
analyzing the distribution densities of the mobile terminal users having specified characteristic attributes, dividing the distribution densities into a plurality of density intervals, displaying the running tracks of the mobile terminal users having specified characteristic attributes on the map with a plurality of colors respectively corresponding to the plurality of density intervals.

8. The device according to any one of claims 5-7, wherein:
the characteristic attributes of the mobile terminal users analyzed by the analyzing module comprise one or more of the following:
age, sex, cultural level, hobby, profession, income, consumption level, family status, health status, place of residence or permanent location.

9. A computer program, comprising program instructions, which, when being executed by a device for data processing, makes the device implement the method of any one of claims 1-4.

10. A carrier, carrying the computer program of claim 9.
